# EUROPEAN PATENT SPECIFICATION

(11) **EP 1 546 554 B1**
(45) Date of publication and mention of the grant of the patent: **22.10.2008**
(21) Application number: 03737953.4
(22) Date of filing: 21.07.2003
(51) Int. Cl.: F03G 7/06

(54) **SHAPE MEMORY ALLOY ACTUATOR**
MEMORY-LEGIERUNGSSTELLGLIED
ACTIONNEUR EN ALLIAGE A MEMOIRE DE FORME

(30) Priority: 24.07.2002 DK 200201134
(43) Date of publication of application: 29.06.2005
(73) Proprietor: M 2 Medical A/S, 2820 Gentofte (DK)
(72) Inventor: MERNOE, Morten, DK-2920 Charlottenlund (DK)
(74) Representative: Peterreins, Frank
(86) International application number: PCT/DK2003/000508
(87) International publication number: WO 2004/009995

(56) References cited:
- EP-A- 1 136 698
- WO-A-90/15928
- WO-A-02/057627
- US-A- 5 335 994
- US-A- 5 816 306
- US-B1- 6 404 098
- US-B2- 6 375 638

## Description

The present invention relates to a shape memory alloy actuator comprising a body arranged displaceable between a first and a second position, releasable holding means adapted for holding said body in said first position, and at least one first and at least one second wire made of a shape memory alloy such as nitinol, said first wire being at one end connected to said body such that shortening of the length of said first wire exerts a force on said body for moving said body from said second to said first position.

US 6 404 098 B1 discloses a drive unit using a shape memory alloy including: a shape memory alloy member made from a shape memory alloy, the shape memory alloy member exhibiting superelasticity when being energized; a drive body connected to the shape memory alloy member, the drive body being moved from a stopping position to a specific operational position when the shape memory alloy member is energized; and a locking mechanism for retaining the drive body at the specific operational position. With this configuration, the drive unit using a shape memory alloy is capable of reducing the power consumption as well as miniaturizing the drive unit.

US 6 375 638 B1 discloses a drive mechanism for a medication delivery device includes a force receiving member, a force applying member and a shape memory alloy (SMA) actuator. The force applying member is operatively coupled to the force receiving member to move the force receiving member to a different position relative to the force applying member. The shape memory alloy actuator is formed from a shape memory alloy material and is operatively coupled to the force applying member. The shape memory alloy actuator is heat activated to distort the shape memory actuator from a first shape to a second shape to activate the force applying member to act upon the force receiving member to move the force receiving member to a different position relative to the force applying member.
Also, the shape memory alloy actuator is returned to the first shape from the second shape after the force receiving member is moved to a different position relative to the force applying member. In addition, the shape memory alloy actuator may be activated by applying and removing an electrical current to the shape memory element.

WO 02/057627 - which is a document according to Art. 54 (3) EPC - discloses a shape memory alloy actuator comprising a body connected through an arm with an activating member, the body being arranged for rotation around a pivot and connected to a first wire and a second wire of a shape memory alloy such as nitinol and to a biasing means such as a tension spring such that heating and therefore shortening of the wire rotates the body counter-clockwise such that the tension spring is in its cocked position while heating (shortening) of the first wire and cooling (lengthening) of the second wire rotates the body clockwise past a balance point for the tension spring whereafter the body rotates further clockwise under the influence of the tension spring, thereby exerting a relatively powerful actuation of the activating member, the whole cyclus being repeated by heating wire causing it to shorten and rotate the body counter-clockwise until the spring is cocked again.

It is an object of the invention to provide a shape memory alloy motor that is cheap to manufacture and efficient in use. This object is achieved by a shape memory alloy motor according to claim 1. The dependent claims contain advantageous features of the invention.

The various aspects of the invention will be described more in detail in the following with reference to various embodiments of a shape memory alloy actuator according to the invention shown, solely by way of example, in the accompanying drawings, where
Figs. 1 and 2 are schematic illustrations of a first embodiment of an actuator according to the invention in two different positions, namely with the activating pin fully retracted in Fig. 1, and with the activating pin fully extended in Fig.2,
Figs. 3 and 4 are schematic illustrations of a second and third embodiment, respectively, of an actuator according to the invention,
Figs. 5-7 are schematic illustrations of three stages in the operation of a fourth embodiment of an actuator according to the invention,
Fig. 8 is a schematic illustration of a first embodiment of a shape memory alloy actuator motor according to the invention,
Fig. 9 is a schematic illustration of a second embodiment of a shape memory alloy actuator motor according to the invention,
Fig. 10 is a schematic illustration of a rack type linear shape memory alloy actuator according to the invention,
Fig. 11 is a graph showing two curves of Contraction versus Force for shape memory alloy wires for different biasing systems for the actuators according to the invention, and
Fig. 12 is a graph showing the relationship between various forces in Newton and the distance of displacement of a piston pump plunger in mm by the actuator shown in Figs. 5-7.

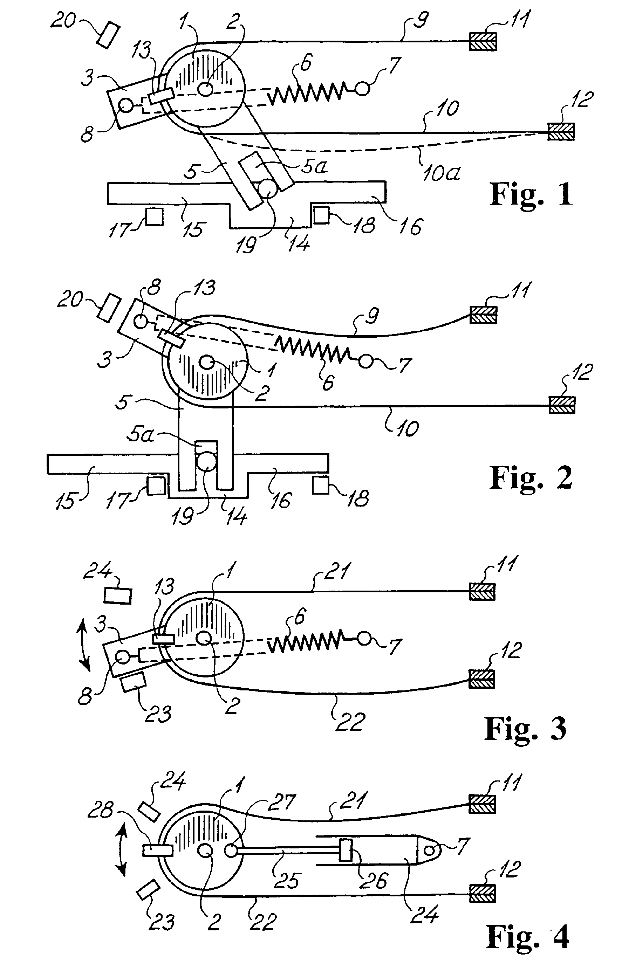

Referring now to Figs. 1 and 2, a pivotable body in the form of a circular disc 1 is arranged for pivoting around a central pivot 2 fixedly attached to a not shown frame of the actuator, and the disc 1 is provided with a peripheral extension 3 and a yoke-like peripheral extension 5. A tension coil spring 6 is at one end thereof pivotably attached to a fastening pin 7 fixedly attached to said frame and is at the other end thereof pivotably attached to a fastening pin 8 fixedly attached to the peripheral extension 3.

Two wires or filaments 9 and 10 of a shape memory alloy such as nickel titanium alloy or nitinol, for instance supplied by the company DYNALLOY, INC, of Costa Mesa, California, USA, under the trade name FLEXINOL, are attached at one end thereof to electrically conductive terminals 11 and 12, respectively, fixedly attached to said frame.

The other end of each of the wires 9 and 10 is attached to an electrically conductive terminal 13 fixedly attached to the periphery of the disc 1. The wires 9 and 10 extend along the periphery of the disc 1 such that the wires 9 and 10 when tensioned extend along and are supported by said periphery. In the drawings the wires 9 and 10 are shown spaced from said periphery for the sake of clarity.

A sliding body 14 having two arms 15 and 16 is arranged for sliding movement between two stop pins 17 and 18 attached to the frame. A pin 19 attached to the sliding body 14 is received in the fork 5a of the yoke-like extension 5 such that the pin 19 may slide and rotate freely in the fork when the disc 1 pivots from the position shown in Fig. 1 to the position shown in Fig. 2 thereby slidingly displacing the body 14 from abutment against stop pin 18 to abutment against stop pin 17 with the arm 15, constituting the activating pin of the actuator, fully extended.

A proximity sensor 20 is attached to the frame and connected to not shown electrical conductors for transmitting a signal from the sensor to a not shown receiver. The terminals 11 and 12 are likewise each connected to an electrical conductor, not shown, connected to a not shown power source for supplying electrical power to the wires 9 and 10 for resistance heating thereof, the terminal 13 being likewise connected to the not shown power source through a not shown electrical conductor for closing the resistance heating circuit.

In use, the wires 9 and 10 are intermittently heated to the transformation or transition temperature (from martensitic to austenitic state) of the shape memory alloy which temperature for nitinol is approximately 90 °C. Thereby the length of the wire is shortened. When the wire cools to below 90 °C the length thereof reverts to normal, i.e. the wire lengthens. The speed at which the shortening takes place, i.e. the contraction time, is directly related to the current input. i.e. the voltage applied over the terminals 11 or 12 and 13.

In the position depicted in Fig. 1, the intermediate disc 1 is in its outermost counter clock-wise position with the arm 15 fully retracted and with the wire 9 cooled to below 90 °C and the wire 10 heated to above 90 °C by applying an electrical voltage between the terminal 12 and 13 whereby an electrical current will flow through the wire 10. The disc 1 has therefore been rotated counter clock-wise to the position shown by the contraction force exerted by the wire 10.

In the next step, the wire 10 is cooled to below 90 °C and thereby lengthens to the shape indicated by the dotted line 10a in Fig. 1. The actuator is now ready to perform an activating extension of the arm 15 towards the left, the end of the arm 15 being intended to come into contact with a not shown lever, plunger, button or the like and depress or activate same during the movement of the arm 15 to the extended leftwards position thereof as depicted in Fig. 2.

Thereafter or simultaneously, the wire 9 is heated to above 90 °C whereby it contracts and exerts a clock-wise force on the disc 1 pivoting it clock-wise around the pivot 2 past the balance position of the disc 1 and spring 6 in which the attachment pins 7 and 8 of the spring 6 are aligned with the pivot 2.

When the disc 1 has rotated clock-wise past said balance point, the tension force exerted by the spring 7 will continue the clock-wise rotation of the disc 1 to the position shown in Fig. 2 with the arm 15 fully extended and the wire 9 slack though still above 90 °C. This is the actual activating movement of the actuator where the force applied to the sliding body 14 by the extension 5 increases because of the increasing lever of force or moment arm of the tension force exerted by the spring 6 on the intermediate disc 1 with respect to the pivot 2 or axis of rotation of the disc 1.

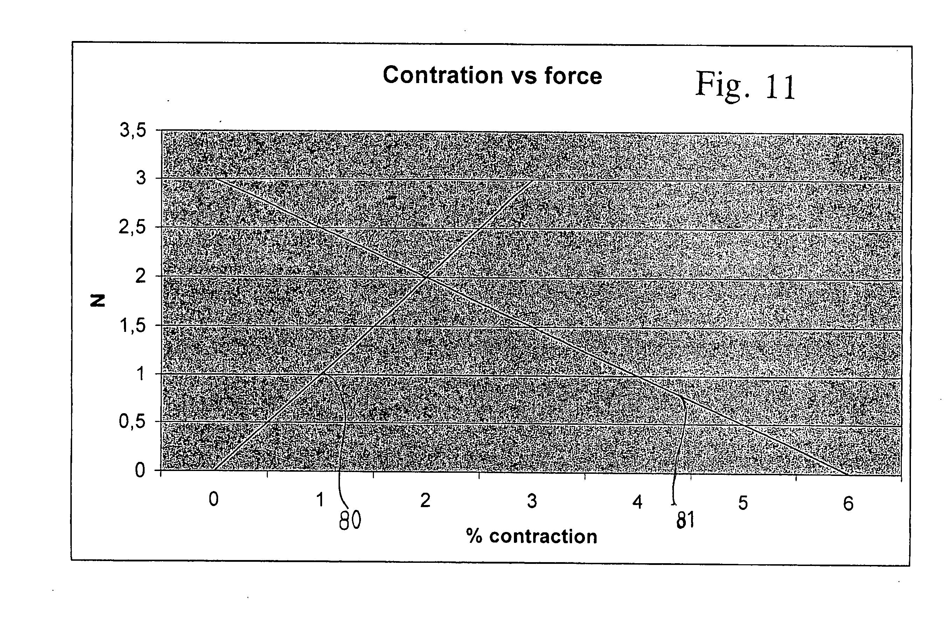

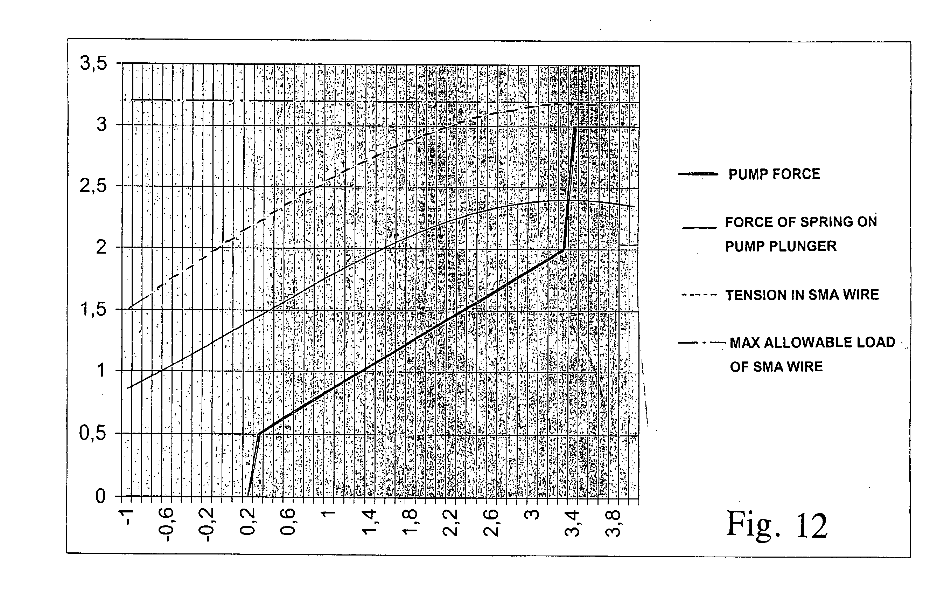

For many applications where the force necessary to perform the function of the actuator, for instance depress a pump piston, increases during the activating stroke, said increase of the spring force moment arm as the disc 1 rotates is a very advantageous feature as will be explained more in detail in connection with Figs 11 and 12 in the following.

An increase of the activating force of the actuator during the activating stroke is also achieved or enhanced by decreasing the distance of the pin 19 from the pivot 2 or axis of rotation of the disc 1 during the activating stroke whereby the moment arm or lever of force of the displacement force exerted on the pin 19 by the yoke-like extension 5 with respect to the pivot 2 is decreased and thereby the displacement force is increased during the activating stroke. This shortening of said distance can be seen from the situation in Fig. 1 at the beginning of the activation stroke to the situation in Fig. 2 at the end of the activation stroke.

Finally, the wire 10 is heated above 90 °C so that it contracts and pivots the disc 1 back to the position shown in Fig. 1 whereby the activating cycle is ready to be repeated.

The length of the wire 10 is larger than the length of the wire 9 because the contraction or shortening of the wire 10 must be large enough to pivot the disc 1 from the position shown in Fig. 2 past the balance point mentioned above while the shortening of the wire 9 only has to be enough the pivot the disc 1 from the position shown in Fig. 1 past said balance point.

Nitinol wires will typically contract about 3% - 6% when heated past the transition temperature. The uncontracted length of the wire 10 should be enough to ensure that the uncontracted wire is fully extended in the position shown in Fig. 2 and that the contracted wire 10 is fully extended when the disc 1 is at least slightly past said balance point in the counter-clockwise direction, i.e. the uncontracted length of wire 10 should be about 22-25 times the distance of travel of terminal 13 between the Fig. 2 position thereof and the balance point position thereof.

The necessary contraction force to be exerted by wires 9 and 10 are rather different because the contraction force of wire 9 only has to counteract the torque or moment of the spring force of spring 6 with the relatively small torque arm in Fig. 1 while the contraction force of wire 10 has to counteract the considerably larger torque of said spring force in Fig. 2. The contraction force of a nitinol wire is larger the larger the diameter or cross sectional area of the wire. The cross sectional area of wire 10 is thus considerably larger than the cross sectional area of wire 9 or there may be a number of wires 10 with the same cross sectional area.

The latter possibility is chosen if it is necessary that the cooling-off time for the wires 10 is as short of possible so that the interval between the activating cycles may be as short as possible. Several small diameter wires with a certain total cross sectional area will cool more rapidly than a single larger diameter wire with the same cross sectional area.

The signal emitted by the proximity sensor 20 each time the extension 3 is in the position shown in Fig 2 may be utilized for many different purposes such as for instance a mere monitoring of the correct function of the actuator or for controlling the timing of the heating of the wires 9 and 10 and thereby the timing of the activating stroke of the sliding body 14. Naturally, the location of the proximity sensor or of any other type of sensor for sensing the position of the disc 1 may be varied according to the purpose thereof, and several such sensors may be provided in different locations for instance for achieving a more complex control of the timing of the activating effect of the actuator.

Referring now to Fig. 3, this embodiment differs from the embodiment of Figs. 1-2 in that a double activating effect may be achieved for each cycle of heating and cooling the shape memory wires 21 and 22 that in this case are of equal length and cross sectional area. The rotation of the disc 1 counter-clockwise and clockwise is limited by stop pins 23 and 24, respectively.

The activating member may be a sliding body similar to body 14 in Fig. 1-2 where both the arm 15 and the arm 16 perform an activating function, or the activating function may be a pull/push activation by for instance arm 15.

The disc 1 may alternatively be provided with a central torsion shaft projecting at right angles to the plane of the disc 1 as a prolongation of the pivot 2 such that the torsion shaft functions as the activating member by for instance rotating a lever to and fro. Many different types of activating members connected to the disc 1 will be obvious to those skilled in the art.

In the position shown in Fig. 3, the disc 1 has just performed an activating rotation counter-clockwise under the influence of the counter-clockwise torque of the force of the spring 6 and is ready for the initiation of a rotation clockwise by heating the wire 21 so that the disc 1 is rotated against the counter-clockwise torque of the spring force until the balance point is passed. Then the activating rotation clockwise is performed by the clockwise torque of the spring force. Also in this embodiment the moment arm of the activating force of the spring 6 increases during the activating stroke in both directions.

Referring now to Fig. 4, the terminal 13 of the embodiments of Figs 1-3 has been substituted by a combined terminal and abutment member 28 for abutting the stop pins 24 and 25. Furthermore, another type of biasing means is utilized, namely a piston and cylinder mechanism comprising a pressurized cylinder 24 pivotably attached to pin 7, a piston 26 and a piston rod 27 pivotably attached to the disc 1 by means of a pin 27.

The piston and cylinder mechanism 24-25 functions like a compression spring and could in fact be substituted by a compression spring. In Fig. 4 the disc 1 is in the balance point position where the pin 7, the pin 27 and the pivot 2 are aligned such that the pressure exerted on the disc 1 by the piston rod 25 does not produce any torque on the disc 1. In the situation shown in Fig. 4, the wire 22 is contracting and rotating the disc counter-clockwise past the balance point. As soon as the balance point has been passed, the torque from the piston rod 25 will cause the activating counter-clockwise rotation of the disc 1 until the member 28 abuts the stop pin 23 whereupon a clockwise rotation may be initiated in a manner very similar to that described above in relation to Fig. 3.

The tension spring 6 in Figs. 1-2 could also be substituted by a piston and cylinder mechanism or a compression spring in an arrangement similar to Fig. 4.

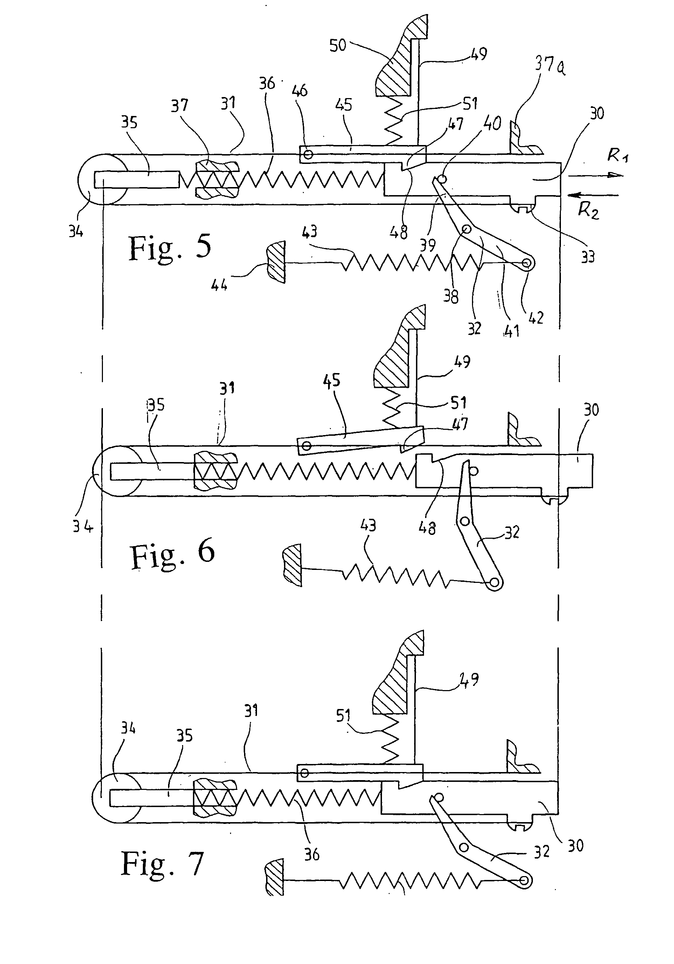

Referring now to Figs. 5-7 an activating body 30 is arranged linearly displaceable in the directions of arrows R1 and R2 under the influence of a shape memory alloy wire 31 and a two-armed lever 32.

One end of the wire 31 is attached to the body 30 at 33 and the other end is attached to a fixed portion 37a of a not shown frame of the actuator, the wire 31 extending around a pulley 34 pivotably arranged on a slide 35 displaceable in the directions of the arrows R1 and R2. A compression spring 36 is arranged between the body 30 and the slide 35 and extends through a passage through a fixed portion 37 of said frame.

The two-armed lever 32 is arranged pivotable around a pivot 38, one arm 39 of the lever abutting a pin 40 on the body 30 and the other arm 41 of the lever being attached at 42 to one end of a tension spring 43, the other end being attached to a fixed portion 44 of said frame such that displacement of the body 30 in the direction of arrow R1 tensions the spring 43 via rotation of the intermediate lever 32.

A pawl or hook element 45 is arranged pivotable around a pivot 46 such that a hook or projection 47 of the hook element 45 may be received in a matching recess 48 in the body 30. A shape memory alloy wire 49 is at one end attached to the hook element 45 and at the other end attached to a fixed portion 50 of said frame. A compression spring 51 is arranged between the fixed portion 50 and the hook element 45

In use, the body 30 is moved to and fro in the direction of the arrows R1 and R2 to actuate a plunger, lever, button, contact and the like during the activating stroke of the body in the direction R1.

In Fig. 5 the wire 31 is cooled to below the transformation temperature of the alloy (for instance by sandwiching the wire between two aluminium rails coated with PTFE) and is at its maximum length and is maintained taut by the biasing action of the compression spring 36. The hook 47 is received in the recess and holds the body 30 against the biasing force of the spring 43 transmitted to the pin 40 by means of the lever 32. The wire 49 is also in its cool state and at its maximum length.

When the activating stroke is to be initiated, the wire 49 is heated to the transformation temperature and shortens or contracts, thereby pivoting the hook element 45 against the biasing force of the spring 51 such that the hook 47 is pulled out of the recess 48 to the release position shown in Fig. 6. The body 30 is thus released for displacement in direction R1 under the influence of the lever 32 pivoted by the spring 43.

During the activating stroke of body 30 in direction R1 the lever or moment arm of the force exerted by the spring 43 relative to the pivot 38 or the axis of rotation of the lever 32 increases such that the displacement force exerted on the pin 40 by the arm 39 increases as the body 30 is displaced in the direction R1.

Likewise, during the activating stroke by the body 30 in direction R1, the lever or moment arm of the displacement force exerted by the arm 39 on the pin 40 relative to the pivot 38 decreases whereby said displacement force increases as the body 30 is displaced in the direction R1.

When the slide 35 abuts the fixed frame portion 37, the activating stroke in direction R1 will be stopped as shown in Fig. 6. In practice the activating stroke preferably is stopped by the resistance to the activating stroke of the body 30 by the object being activated such that the stroke is stopped before the slide 35 abuts the fixed frame portion 37.

So as to cock the actuator again, the wire 49 is cooled to allow the spring 51 to pivot the hook element 45 towards the holding position thereof while the wire 31 is heated until it shortens and thereby causes the slide 35 to abut the fixed frame portion 37 and the pulley 34 to rotate clock-wise while the body 30 is displaced in the direction R2 against the force of the spring 43 that thereby is lengthened while the lever 32 pivots counter clock-wise. When the body 30 has reached the position shown in Fig. 7, the hook 47 is pressed into the recess 48 and the wire 31 may then be cooled so that the situation in Fig. 5 is re-established ready to initiate a new activation cycle of the actuator.

During the tensioning of the spring 43, the force exerted by the wire 31 necessary for this tensioning is largest at the beginning of the displacement of the body 30 in the direction R2 because of the large moment arm of the force of the spring 43 and the small moment arm of the rotation force of the pin 40 on the arm 39, and the force exerted by the wire 31 decreases as the body 30 is displaced in the direction R2. This is an advantageous development of the force in the wire 31 during the cocking of the actuator as will be explained more in detail in the following in connection with Figs. 11 and 12.

By adapting the actuator according to the invention such that the activating stroke is performed by a force exerted by a biasing means, a further advantage is obtained in that any blocking of the activating stroke of the activating body, for instance because the activated object such as a pump plunger is blocked, will only entail that the activation stroke is stopped with no damage to the SMA wire. If the activating stroke were carried out under the influence of a shortening of a shape memory alloy wire, said wire would probably be damaged or snapped if the activating stroke were blocked.

The extra length of the wire 31 obtained by means of the pulley 34 is advantageous for giving a longer activating stroke with a compact construction of the actuator.

The heating of the wires 31 and 49 is preferably carried out in a manner similar to the heating of the wires 9 and 10 in Figs 1-2 by means of not shown electrically conductive connections of the ends thereof to a power source.

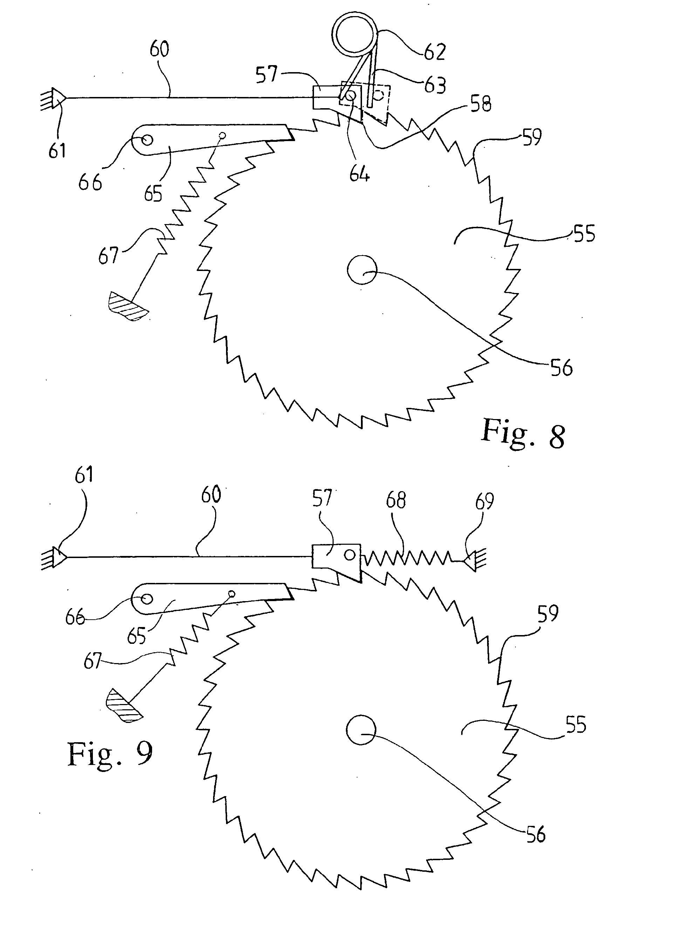

Referring now to Fig. 8, a toothed wheel or gear 55 is rotatably arranged on a power output shaft 56 journalled in a not shown frame of the actuator motor. A body 57 having an edge portion 58 fitting between two neighbouring teeth 59 of the gear 55 is arranged in said frame displaceable between the position shown in full lines and the position shown in dotted lines.

A shape memory alloy wire 60 is at one end attached to the body 57 and at the other end to a fixed portion 61 of said frame. A coiled flat or wire spring 62 integral with or connected to an arm 63 is attached to said frame such that said arm 63 may pivot around one end thereof opposite the free end thereof. The arm 63 abuts a pin 64 on the body 57.

A pawl 65 is pivotably arranged on a pivot 66 and is biased by a tension spring 67 so as to constantly abut the rim of the gear 55.

In use, the gear 55 is turned clock-wise by the body 57 being displaced from the full line position to the dotted line position thereof by the force of the spring 62 acting through the intermediate arm 63 on the pin 64, whereby the gear advances the width of one tooth 59 and the pawl 65 moves from locking engagement between one pair of teeth 59 to a locking position between the next pair of teeth in the counter clock-wise direction.

When the gear is locked against rotating counter clock-wise by the pawl 65, the SMA wire 60 is heated and shortens whereby the body is displaced from the dotted line position to the full line position against the force of the intermediate arm 63 on the pin 64 thereby cocking the spring 62.

The lever or moment arm of the displacement force exerted by the intermediate arm in the clock-wise direction with respect to the pivoting point of the arm decreases as the body is displaced in the activating direction from the full line position to the dotted line position whereby the displacement force exerted by the intermediate arm 63 on the pin 64 increases.

Referring now to Fig. 9, a SMA actuator motor similar to the motor of Fig. 8 is shown, the spring 62 and intermediate arm 63 being substituted by a tension spring 68 fastened to the body 57 and to a fixed portion 69 of a not shown frame.

The operation of the motor of Fig. 9 is very similar to the one in Fig. 8 except that the displacement force exerted on the body 57 by the spring 68 is exerted directly and declines substantially proportionally with the distance of displacement.

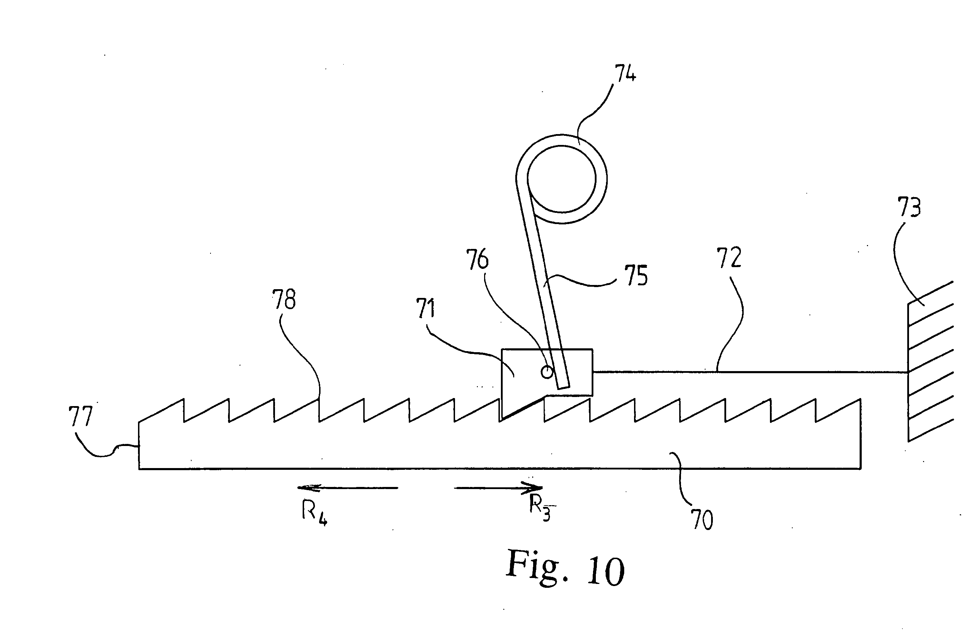

Referring now to Fig. 10, a rack 70 is arranged displaceable in a not shown frame in the direction R4 and a body 71 is arranged displaceable in the directions R3 and R4 as well as transversely thereto. A SMA wire 72 is attached to the body 71 and to a fixed portion 73 of said frame. A coil spring 74 attached to said frame and integral with or connected to an intermediate arm 75 exerts a displacement force on a pin 76 of the body 71 through the intermediate arm 75 in a manner very similar to spring 62 in Fig. 8.

The rack 70 advances the distance of the width of one tooth 78 thereof in the direction R4 for every cycle of heating and cooling of the SMA wire 72 in the same way as gear 55 in Fig. 8 is rotated by wire 60, spring 62, intermediate arm 63 and body 57 in Fig. 8.

The rack 70 may be used to push an object by means of front end 77, for instance a piston in a cylinder to empty said cylinder of liquid or paste through an aperture in said cylinder.

Means to displace the body 71 transversely to the rack 70 may be provided for allowing the rack to be displaced in the direction R3 for repeating the pushing travel of the rack 70 in the direction R4.

Referring now to Fig. 11, the curve or line 80 indicates the relationship between the force exerted by the SMA wire 60 in Fig. 9 on the body 57 as a function of the contraction or shortening thereof. The force increases proportionally with the contraction because of the proportional increase of the spring force of the spring 68 when it is stretched by contraction of the wire 60.

The line or curve 81 is symbolic of the curves corresponding to the relationship between contraction and force exerted for the embodiments of Figs. 1-8 and 9 where the force in the wires 10, 22, 24 31, 60 and 72, respectively is largest at the beginning of the contraction or shortening, and the contraction length of the wire is much larger because of the variation in the length of the moment arm or arms during the activating stroke as described above.

In this manner, a high coefficient of mechanical efficiency is obtained because the longer contraction distance for a given input of energy to heat the SMA wires gives an increased input of energy into the activating system.

The actual curves 81 will not be linear but will reflect the varying rate of change of the moment arm or moment arms during the activating stroke.

Referring now to Fig. 12 and Figs 5-7, an actuator as shown in Figs. 5-7 is applied to operate a piston pump by depressing the plunger thereof with the body 30.

The pump piston plunger and body 30 travel from 0.2mm to 3.4mm during the activating stroke of the body 30. The force required to displace the plunger increases substantially proportionally from approx. 0.5 N to approx. 2N where the force increases steeply because the plunger has reached the end of its path.

The force exerted by the spring 43 on the body 30 and thus the plunger develops as an increasing parable-like curve corresponding to the curve for the tension or force in the SMA wire 31 necessary to retract the body 30 against the leveraged force of the spring 43.

It is clear that the curves show that the actuator according to the invention can produce an increasing force as the displacement increases which is very advantageous in many applications such as pumping with piston pumps where the force required increases with the distance travelled by the plunger.

## Claims

1. A shape memory alloy motor comprising:
a body (57) arranged displaceable between a first and a second position,
at least one first wire (60) made of a shape memory alloy such as nitinol, said first wire being at one end connected to said body such that shortening of the length of said first wire exerts a reset displacement force on said body for moving said body from said second to said first position,
a biasing means (62) arranged and adapted for exerting a driving displacement force on said body (57) for moving said body from said first to said second position,
a gear (55) having a first and second rotation direction, said body (57) having a portion adapted to fit between two adjacent teeth of said gear (55),
**characterized in that**
said body (57) and said gear (55) being adapted and arranged such that in said first position said portion is located between a pair of teeth of said gear (55) and in said second position said portion is located between the adjacent pair of teeth of said gear reckoned in said second rotation direction of said gear (55) such that said driving displacement force will cause said body to rotate said gear in said first direction.

2. The motor according to claim 1, **characterized by** a pawl member (65) arranged displaceable between a locking position between a pair of teeth of said gear (55) for preventing rotation of said gear in said second direction and a release position.

3. The motor according to claim 2, **characterized in that** the pawl member (65) is biased by a tension spring (67) so as to constantly abut the gear (55).

4. The shape memory alloy motor according to any one of the preceding claims, wherein the biasing means (62) comprises at least one of a tension spring, a compression spring, a straight or arcuate flat spring, and a piston and cylinder mechanism.

5. The shape memory alloy motor according to any one of the preceding claims, wherein the gear (55) comprises a toothed wheel.

6. The shape memory alloy motor according to any one of the preceding claims, wherein the gear (55) outputs power to a power output shaft (56) movably arranged in the frame.

7. The shape memory alloy motor of claim 6, wherein the power output shaft operates within a piston pump to actuate a plunger of the piston pump.

8. The shape memory alloy motor according to any one of the preceding claims, wherein the first wire (60) is shortened to exert the reset displacement force by heating the shape memory alloy.

9. The shape memory alloy motor according to any one of the preceding claims, wherein the reset displacement force causes the body (57) to move and thereby cocks the biasing means (62).

10. The shape memory alloy motor according to any one of the preceding claims, wherein the first wire (60) is heated to a transition temperature to shorten the first wire and thereby exert the reset displacement force.

11. The shape memory alloy motor of claim 10, wherein the first wire (60) is electrically heated to the transition temperature of approximately 90°C.

12. The shape memory alloy motor of claim 10, wherein the first wire (60) contracts about 3% to about 6% in length when heated past the transition temperature.

13. The shape memory alloy motor according to any one of the preceding claims, wherein the first wire (60) comprises several small diameter filaments comprising nitinol material.

14. A device comprising a piston pump, **characterized by** a shape memory alloy motor according to one of the preceding claims for actuating a plunger of the piston pump.

## Patentansprüche

1. Formgedächtnis-Legierungsmotor, umfassend:
einen Körper (57) verstellbar angeordnet zwischen einer ersten und einer zweiten Position, mindestens ein erster Draht (60) gefertigt aus einer Formgedächtnislegierung wie Nitinol, wobei der erste Draht an einem Ende mit dem Körper verbunden ist, sodass eine Verkürzung der Länge des ersten Drahts eine rückstellende Verstellkraft auf den Körper ausübt, um den Körper von der zweiten zur ersten Position zu bewegen,
ein Sperrmittel (62), angeordnet und angepasst zur Ausübung einer treibenden Verstellkraft auf den Körper (57), um den Körper aus der ersten in die zweite Position zu bewegen,
ein Zahnrad (55) mit einer ersten und zweiten Drehrichtung, wobei der Körper (57) einen Teilbereich hat, der angepasst ist, um zwischen zwei aufeinander folgende Zähne des Zahnrads (55) zu passen,
**dadurch gekennzeichnet, dass**
der Körper (57) und das Zahnrad (55) angepasst und angeordnet sind, sodass in der ersten Position der Teilbereich sich zwischen einem Paar von Zähnen des Zahnrads (55) befindet und in der zweiten Position der Teilbereich sich zwischen dem benachbarten Paar von Zähnen des Zahnrads befindet, gerechnet in der zweiten Drehrichtung des Zahnrads (55), sodass die treibende Verstellkraft bewirken wird, dass der Körper das Zahnrad in die erste Richtung dreht.

2. Motor nach Anspruch 1, **gekennzeichnet durch** ein Klinkenglied (65) verstellbar angeordnet zwischen einer Sperrposition zwischen einem Paar von Zähnen des Zahnrads (55), um Rotation des Zahnrads in der zweiten Richtung zu verhindern, und einer Freigabeposition.

3. Motor nach Anspruch 2, **dadurch gekennzeichnet, dass** das Klinkenglied (65) von einer Zugfeder (67) gesperrt wird, um ständig an das Zahnrad (55) zu stoßen.

4. Formgedächtnis-Legierungsmotor nach einem der vorhergehenden Ansprüche, wobei das Sperrmittel (62) mindestens eine der folgenden umfasst, eine Zugfeder, eine Druckfeder, eine gerade oder gebogene Blattfeder und einen Kolben- und Zylinder-Mechanismus.

5. Formgedächtnis-Legierungsmotor nach einem der vorhergehenden Ansprüche, wobei das Zahnrad (55) ein gezahntes Rad umfasst.

6. Formgedächtnis-Legierungsmotor nach einem der vorangehenden Ansprüche, wobei das Zahnrad (55) Kraft auf eine Kraftausgabewelle (56) ausgibt, die in dem Rahmen beweglich angeordnet ist.

7. Formgedächtnis-Legierungsmotor nach Anspruch 6, wobei die Kraftausgabewelle in einer Kolbenpumpe arbeitet, um einen Tauchkolben der Kolbenpumpe anzusteuern.

8. Formgedächtnis-Legierungsmotor nach einem der vorhergehenden Ansprüche, wobei der erste Draht (60) verkürzt wird, um die rückstellende Verstellkraft auszuüben durch Erhitzen der Formgedächtnis-Legierung.

9. Formgedächtnis-Legierungsmotor nach einem der vorhergehenden Ansprüche, wobei die rückstellende Verstellkraft bewirkt, dass der Körper (57) sich bewegt und **dadurch** das Sperrmittel (62) spannt.

10. Formgedächtnis-Legierungsmotor nach einem der vorhergehenden Ansprüche, wobei der erste Draht (60) auf eine Übergangstemperatur erhitzt wird, um den ersten Draht zu verkürzen und **dadurch** die rückstellende Verstellkraft ausübt.

11. Formgedächtnis-Legierungsmotor nach Anspruch 10, wobei der erste Draht (60) elektrisch auf die Übergangstemperatur von ungefähr 90°C erhitzt wird.

12. Formgedächtnis-Legierungsmotor nach Anspruch 10, wobei der erste Draht (60) sich um ungefähr 3% bis ungefähr 6% in der Länge verkürzt, wenn er über die Übergangstemperatur erhitzt wird.

13. Formgedächtnis-Legierungsmotor nach einem der vorhergehenden Ansprüche, wobei der erste Draht (60) mehrere Fäden kleinen Durchmessers umfasst, die das Material Nitinol umfassen.

14. Vorrichtung umfassend eine Kolbenpumpe, **gekennzeichnet durch** einen Formgedächtnis-Legierungsmotor nach einem der vorangehenden Ansprüche zur Betätigung eines Tauchkolbens der Kolbenpumpe.

## Revendications

1. Moteur en alliage à mémoire de forme comprenant :
un corps (57) agencé de façon mobile entre des première et seconde positions,
au moins un premier fil (60) constitué d'un alliage à mémoire de forme tel que du nitinol, ledit premier fil étant, au niveau d'une extrémité, relié audit corps de sorte que le raccourcissement de la longueur dudit premier fil exerce une force de déplacement de remise à l'état initial sur ledit corps pour déplacer ledit corps de ladite seconde position vers ladite première position,
un moyen de sollicitation (62) agencé et adapté pour exercer une force de déplacement d'entraînement sur ledit corps (57) pour déplacer ledit corps de ladite première position vers ladite seconde position,
un pignon (55) possédant des première et seconde directions de rotation, ledit corps (57) possédant une partie adaptée pour tenir entre deux dents adjacentes dudit pignon (55),
**caractérisé en ce que**
ledit corps (57) et ledit pignon (55) sont adaptés et agencés de sorte que, dans ladite première position, ladite partie soit positionnée entre une paire de dents dudit pignon (55) et, dans ladite seconde position, ladite partie soit positionnée entre la paire adjacente de dents dudit pignon estimée dans ladite seconde direction de rotation dudit pignon (55) de sorte que ladite force de déplacement d'entraînement oblige ledit corps à faire tourner ledit pignon dans ladite première direction.

2. Moteur selon la revendication 1, **caractérisé par** un élément de cliquet (65) agencé de façon mobile entre une position de verrouillage entre une paire de dents dudit pignon (55) pour empêcher la rotation dudit pignon dans ladite seconde direction et une position de libération.

3. Moteur selon la revendication 2, **caractérisé en ce que** l'élément de cliquet (65) est sollicité par un ressort de tension (67) afin de prendre constamment appui sur le pignon (55).

4. Moteur en alliage à mémoire de forme selon l'une quelconque des revendications précédentes, dans lequel le moyen de sollicitation (62) comprend au moins un parmi un ressort de tension, un ressort de compression, un ressort plat droit ou arqué, et un mécanisme de piston et cylindre.

5. Moteur en alliage à mémoire de forme selon l'une quelconque des revendications précédentes, dans lequel le pignon (55) comprend une roue dentée.

6. Moteur en alliage à mémoire de forme selon l'une quelconque des revendications précédentes, dans lequel le pignon (55) produit une puissance sur un arbre de sortie de puissance (56) agencé de façon mobile dans le cadre.

7. Moteur en alliage à mémoire de forme de la revendication 6, dans lequel l'arbre de sortie de puissance fonctionne à l'intérieur d'une pompe à piston pour actionner un piston plongeur de la pompe à piston.

8. Moteur en alliage à mémoire de forme selon l'une quelconque des revendications précédentes, dans lequel le premier fil (60) est raccourci pour exercer la force de déplacement de remise à l'état initial en chauffant l'alliage à mémoire de forme.

9. Moteur en alliage à mémoire de forme selon l'une quelconque des revendications précédentes, dans lequel la force de déplacement de remise à l'état initial oblige le corps (57) à se déplacer et arme ainsi le moyen de sollicitation (62).

10. Moteur en alliage à mémoire de forme selon l'une quelconque des revendications précédentes, dans lequel le premier fil (60) est chauffé jusqu'à une température de transition pour raccourcir le premier fil et ainsi exercer la force de déplacement de remise à l'état initial.

11. Moteur en alliage à mémoire de forme de la revendication 10, dans lequel le premier fil (60) est électriquement chauffé jusqu'à la température de transition d'approximativement 90 °C.

12. Moteur en alliage à mémoire de forme de la revendication 10, dans lequel le premier fil (60) se contracte d'environ 3 % à environ 6 % en longueur lorsqu'il est chauffé au-delà de la température de transition.

13. Moteur en alliage à mémoire de forme selon l'une quelconque des revendications précédentes, dans lequel le premier fil (60) comprend plusieurs filaments de faible diamètre comprenant un matériau en nitinol.

14. Dispositif comprenant une pompe à piston, **caractérisé par** un moteur en alliage à mémoire de forme selon une des revendications précédentes destiné à actionner un piston plongeur de la pompe à piston.
